(19) Europäisches Patentamt / European Patent Office / Office européen des brevets

(11) **EP 2 522 507 A1**

(12) **EUROPEAN PATENT APPLICATION**
published in accordance with Art. 153(4) EPC

(43) Date of publication:
**14.11.2012 Bulletin 2012/46**

(21) Application number: **11731812.1**

(22) Date of filing: **06.01.2011**

(51) Int Cl.:
**B32B 27/36** (2006.01)   **G02B 5/30** (2006.01)

(86) International application number:
**PCT/JP2011/050082**

(87) International publication number:
**WO 2011/083814 (14.07.2011 Gazette 2011/28)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.01.2010 JP 2010001781**

(71) Applicant: **Mitsubishi Plastics, Inc.**
**Tokyo 100-8252 (JP)**

(72) Inventor: **SAITO, Tomohisa**
**Maibara-shi**
**Shiga 521-0234 (JP)**

(74) Representative: **TER MEER - STEINMEISTER & PARTNER GbR**
**Patentanwälte**
**Mauerkircherstrasse 45**
**81679 München (DE)**

(54) **POLYESTER FILM FOR LUMINANCE-IMPROVING MEMBER**

(57)    The present invention provides a polyester film having excellent properties and being suitable as a film for brightness enhancement members which is capable of highly controlling orientation of a liquid crystal coated on a surface of the polyester film as a base material and can prevent the thus coated liquid crystal from suffering from occurrence of drawbacks such as evenness and formation of streaks. There is provided a polyester film for brightness enhancement members which has a laminated structure having a total thickness of 125 to 300 $\mu$m and comprising no coating layer, in which at least one of outermost surfaces of the polyester film has a water droplet contact angle of 30 to 55°C, and the polyester film comprises an orientable liquid crystal coating layer subjected to no orientation treatment which is formed on the one outermost surface of the polyester film which surface has a water droplet contact angle of 30 to 55°C.

EP 2 522 507 A1

**Description**

<u>TECHNICAL FIELD</u>

The present invention relates to a polyester film suitably used for brightness enhancement members.

<u>BACKGROUND ART</u>

As films for improving a brightness of liquid crystal-related members, there are known so-called brightness enhancement films such as BEF (Brightness Enhancement Film) produced by 3M, reflection polarizing films and DBEF (Dual Brightness Enhancement Film) produced by 3M, which have been extensively used in various applications such as mobile phones and liquid crystal TVs. These films, for example, those films used in liquid crystal TVs, have such an environmental advantage that the amount of light in backlight units as well as the number of the backlight units, and the number of LED's used therein can be reduced.

However, these films are expensive and therefore tend to suffer from unstable supply, etc. Although study on alternative products for these films has been conducted, any films capable of satisfying properties required for brightness enhancement films have not been obtained or furnished until now.

In order to achieve the improvement in brightness as attained by BEF or DBEF, there are known several methods. For example, there are known the method in which a surface of a polymer is formed into a specific shape using a mold to utilize reflection of light thereon (BEF), and the method in which a film is provided with an ultrafine laminated structure (DBEF). In addition, there is known the method in which a polymer is coated with various nematic liquid crystals or cholesteric liquid crystals, and then the thus coated liquid crystals are oriented to utilize recycling of a light incident thereto which is inhibited from directly penetrating therethrough (Patent Document 1).

The method of coating the polymer with the liquid crystal is superior in price and stability of supply. However, it is important how to control orientation of the liquid crystal which is contacted with a surface of the polymer.

As the member onto which a liquid crystal having an orientation property such as nematic liquid crystals and cholesteric liquid crystals is applied, there may be generally used polyimides. The key to the above member is a surface treatment thereof which is conducted in order to control orientation thereof, for example, a rubbing treatment. However, when using a polyester film as an alternative film therefor, there tends to arise such a problem that upon coating the polyester film obtained after being subjected to the surface treatment, for example, rubbing treatment, with the liquid crystals, it is difficult to well orient the liquid crystals owing to the difference in orientation property for the polyester from that for the polyimides, so that there tends to occur defective appearance such as unevenness and formation of streaks.

The key to these problems is the condition of an outermost surface of the polyester film as a base material, and therefore the problems can be solved by formation of a specific surface condition of the polyester film. For example, the rubbing treatment can be most effectively carried out by controlling film-forming conditions to vary a crystallinity of the polyester film, and controlling the kind and content of particles in the polyester film to vary a surface hardness of the polyester film, so that the coated liquid crystals can be well oriented on the polyester film.

However, the rubbing treatment tends to generate dusts, etc., in a production site of the polyester film which has a high degree of cleanness. In addition, the number of steps in the process for production of the polyester film tends to be increased, resulting in poor productivity. Further, there tends to arise such a problem that the production process has a poor yield owing to difficulty in finely controlling the very delicate rubbing treatment.

Under these circumstances, there is a demand for a method capable of coating the polyester film with an orientable liquid crystal which can exhibit a treatment uniformity in an in-line and non-contact manner without generation of dusts, etc., and can be used in place of the rubbing treatment.

<u>PRIOR DOCUMENTS</u>

<u>Patent Document</u>

   Patent Document 1: Japanese Patent No. 2767382

<u>SUMMARY OF THE INVENTION</u>

<u>Problems to be Solved by the Invention</u>

The present invention has been accomplished to solve the above problems. An object of the present invention is to provide a polyester film which is capable of controlling orientation of a liquid crystal coated thereon, is free from drawbacks such as unevenness and formation of streaks, and can be suitably used as a film for brightness enhancement members.

Means for Solving Problems

As a result of the present inventors' earnest study, it has been found that the above problems can be readily solved by using a polyester film having a specific structure. The present invention has been attained on the basis of this finding.

That is, in a first aspect of the present invention, there is provided a polyester film for brightness enhancement members which has a laminated structure having a total thickness of 125 to 300 $\mu$m and comprising no coating layer, at least one of outermost surfaces of the polyester film having a water droplet contact angle of 30 to 55°C. In a second aspect of the present invention, there is provided the polyester film for brightness enhancement members which has a laminated structure having a total thickness of 125 to 300 $\mu$m and comprising no coating layer, in which at least one of outermost surfaces of the polyester film has a water droplet contact angle of 30 to 55°C, and the polyester film comprises an orientable liquid crystal coating layer subjected to no orientation treatment which is formed on the at least one outermost surface of the polyester film which surface has a water droplet contact angle of 30 to 55°C.

EFFECT OF THE INVENTION

In accordance with the present invention, it is possible to provide a polyester film which is capable of controlling orientation of a liquid crystal when applying the liquid crystal onto a surface of the polyester film, is free from occurrence of unevenness and formation of streaks, and can be suitably used as a film for brightness enhancement members, and to produce such a polyester film at low costs and with a high yield. Therefore, the present invention has a high industrial value.

PREFERRED EMBODIMENTS FOR CARRYING OUT THE INVENTION

The present invention will be described in detail below.

The polyester film constituting the polyester film of the present invention may have either a single layer structure or a multilayer structure. Unless departing from the scope of the present invention, the polyester film may have not only a two or three layer structure but also a four or more multilayer structure, and the layer structure of the polyester film is not particularly limited.

The polyester used in the polyester film of the present invention is preferably in the form of a homopolyester in view of requirements for reducing production costs and facilitating works of respective steps. The homopolyester is preferably obtained by polycondensing an aromatic dicarboxylic acid and an aliphatic glycol. Examples of the aromatic dicarboxylic acid include terephthalic acid and 2,6-naphthalenedicarboxylic acid. Examples of the aliphatic glycol include ethylene glycol, diethylene glycol and 1,4-cyclohexanedimethanol. Typical examples of the polyesters include polyethylene terephthalate or the like.

For the main purposes of imparting an easy-slipping property to the film and preventing occurrence of flaws in the film, particles are preferably blended in the polyester film of the present invention. The kind of particles to be blended in the polyester film is not particularly limited, and any particles may be used as long as the particles are capable of imparting a good easy-slipping property to the film. Specific examples of the particles include particles of silica, calcium carbonate, magnesium carbonate, barium carbonate, calcium sulfate, calcium phosphate, magnesium phosphate, kaolin, aluminum oxide, titanium oxide, etc. In addition, there may also be used heat-resistant organic particles as described in Japanese Patent Publication (KOKOKU) No. 59-5216, Japanese Patent Application Laid-Open (KOKAI) No. 59-217755 or the like. Examples of the other heat-resistant organic particles include particles of thermosetting urea resins, thermosetting phenol resins, thermosetting epoxy resins, benzoguanamine resins, etc. Further, there may also be used deposited particles obtained by precipitating and finely dispersing a part of metal compounds such as those derived from a catalyst during the process for production of the polyester.

On the other hand, the shape of the particles used in the polyester film is also not particularly limited, and may be any of a spherical shape, a massive shape, a bar shape, a flat shape, etc. Further, the hardness, specific gravity, color and the like of the particles are also not particularly limited. These particles may be used in combination of any two or more kinds thereof, if required.

The average particle diameter of the particles used in the polyester film is usually in the range of 0.01 to 3 $\mu$m and preferably 0.1 to 2 $\mu$m. When the average particle diameter of the particles is less than 0.01 $\mu$m, the particles may fail to impart a sufficient easy-slipping property to the polyester film. On the other hand, when the average particle diameter of the particles is more than 3 $\mu$m, the film tends to be deteriorated in transparency owing to the aggregated particles upon production of the film, as well as tends to suffer from breakage, resulting in problems such as poor productivity.

The content of the particles in the polyester film of the present invention is usually in the range of 0.001 to 5% by weight and preferably 0.005 to 3% by weight. When the content of the particles in the polyester film is less than 0.001% by weight, the resulting film tends to be insufficient in easy-slipping property. On the other hand, when the content of the particles in the polyester layer is more than 5% by weight, the resulting film tends to be insufficient in transparency.

The method of adding the particles to the polyester film is not particularly limited, and any conventionally known methods can be suitably used therefor. For example, the particles may be added at any optional stages in the process for production of the polyester forming the respective layers. The particles are preferably added to the polyester after completion of the esterification reaction or transesterification reaction.

In addition, there may also be used the method of blending a slurry of the particles prepared by dispersing the particles in ethylene glycol or water with the raw polyester material using a vented kneading extruder, the method of blending the dried particles with the raw polyester material using a kneading extruder, or the like.

Meanwhile, the polyester film according to the present invention may also comprise, in addition to the above particles, known additives such as an antioxidant, an antistatic agent, a thermal stabilizer, a lubricant, a dye, a pigment, etc., if required.

The thickness of the polyester film according to the present invention is not particularly limited, and the polyester film may have any thickness as long as it can maintain a suitable film shape. The thickness of the polyester film is usually in the range of 10 to 350 $\mu$m and preferably 50 to 250 $\mu$m.

Next, an example of the process of producing the polyester film according to the present invention is specifically explained, although not particularly limited thereto. That is, in the production process, there is preferably used such a method in which the above-mentioned raw polyester material is extruded from a die in the form of a molten sheet, and the molten sheet is cooled and solidified on a cooling roll to obtain an unstretched sheet. In this case, in order to enhance a surface flatness of the obtained sheet, it is preferred to enhance adhesion between the sheet and the rotary cooling drum. For this purpose, an electrostatic adhesion method and/or a liquid coating adhesion method are preferably used. Next, the thus obtained unstretched sheet is biaxially stretched. In such a case, the unstretched sheet is first stretched in one direction thereof using a roll-type or tenter-type stretching machine. The stretching temperature is usually 70 to 120°C and preferably 80 to 110°C, and the stretch ratio is usually 2.5 to 7 times and preferably 3.0 to 6 times. Next, the thus stretched film is stretched in the direction perpendicular to the stretching direction of the first stage. In this case, the stretching temperature is usually 70 to 170°C, and the stretch ratio is usually 3.0 to 7 times and preferably 3.5 to 6 times. Successively, the resulting biaxially stretched sheet is heat-treated at a temperature of 180 to 270°C under a tension or relaxation within 30% to obtain a biaxially oriented film. Upon the above stretching steps, there may also be used the method in which the stretching in each direction is carried out in two or more stages. In such a case, the multi-stage stretching is preferably performed such that the stretch ratio in each of the two directions is finally fallen within the above-specified range.

Also, upon producing the polyester film according to the present invention, there may also be used a simultaneous biaxial stretching method. The simultaneous biaxial stretching method is such a method in which the above unstretched sheet is stretched and oriented in both of the machine and width directions at the same time while maintaining the sheet in a suitably temperature-controlled condition at a temperature of usually 70 to 120°C and preferably 80 to 110°C. The stretch ratio used in the simultaneous biaxial stretching method is 4 to 50 times, preferably 7 to 35 times and more preferably 10 to 25 times in terms of an area ratio of the sheet to be stretched. Successively, the obtained biaxially stretched sheet is heat-treated at a temperature of 170 to 250°C under a tension or relaxation within 30% to obtain a stretched oriented film. As the apparatus used in the above simultaneous biaxial stretching method, there may be employed those stretching apparatuses of any conventionally known type such as a screw type stretching apparatus, a pantograph type stretching apparatus and a linear drive type stretching apparatus.

It is required that the polyester film of the present invention is subsequently subjected to a coating step with an orientable liquid crystal, and therefore surface conditions of the film such as surface wettability become important factors. The surface conditions of the polyester film required in the present invention include an extremely small water droplet contact angle on a surface of the film, that is, the polyester film is essentially required to exhibit a high surface wettability. As the surface modifying method, there is considered the method in which the above function is imparted to the surface of the film by electric surface modification or coating. However, it tends to be undesirable to subject the polyester film of the present invention to coating treatment. In the process for production of a polyester film used for brightness enhancement members, the polyester film is subsequently further subjected to a coating step with a liquid crystal. In such a coating step, there is generally used a lyotropic method or a thermotropic method. In the lyotropic method using a solvent, components of the coating layer tend to be dissolved therein and then aggregated together, so that there is a high possibility that the surface of the resulting film suffers from defects such as unevenness. For this reason, in the present invention, a corona treatment is preferably used.

In the present invention, a discharge amount and a discharge degree as indices of corona intensity in the corona discharge treatment are defined as follows. That is, the discharge amount and the discharge degree are respectively represented by the following formulae in which L (m) represents a length of a discharge electrode; S (cm$^2$) represents a discharge area of the discharge electrode; V (m/min) represents a film feed velocity; and P (W) represents a discharge power:

$$\text{Discharge amount (W/m}^2\text{/min)} = P/(L \times V)$$

$$\text{Discharge degree (W/cm}^2\text{)} = P/S$$

In the present invention, in the corona discharge treatment to which the surface of the polyester film is subjected, the discharge amount is usually 5 to 60 W/m$^2$/min, preferably 15 to 45 W/m$^2$/min, and more preferably 25 to 35 W/m$^2$/min. Whereas, the discharge degree is usually 3 to 36 W/cm$^2$, preferably 9 to 27 W/cm$^2$, and more preferably 15 to 21 W/cm$^2$. When the corona discharge amount is less than 5 W/m$^2$/min and the discharge degree is less than 3 W/cm$^2$, the effect attained by the corona discharge treatment tends to become lowered, so that the orientable liquid crystal tends to be hardly coated on the surface of the film with a good appearance. When the corona discharge amount is more than 60 W/m$^2$/min and the discharge degree is more than 36 W/cm$^2$, the effect of enhancing a wettability tends to be no longer increased, or the film tends to be melted owing to the large voltage applied thereto, which might result in poor appearance or occurrence of defects such as formation of holes.

In the polyester film of the present invention, as a method of evaluating a surface modifying effect of the corona treatment, it is recommended to measure a water droplet contact angle thereof. The value of the water droplet contact angle on a surface of the film after subjected to rubbing surface treatment tends to be decreased as compared to the value of the water droplet contact angle on the surface of the film after subjected to the surface corona treatment. This is because in the latter case, oxygen element is inserted into the surface of the film owing to the applied corona to thereby impart a hydrophilic effect thereto, so that the value of the water droplet contact angle is extremely decreased.

The value of the water droplet contact angle on the surface of the polyester film according to the present invention which is obtained after being subjected to the surface treatment is preferably improved by 30 to 55°, more preferably by 35 to 50° and still more preferably by 40 to 45° as compared to the value before subjected to the surface treatment. When the value of the water droplet contact angle on the surface of the film after subjected to the rubbing treatment is higher by more than 55° than the value before subjected to the rubbing treatment, the liquid crystal tends to be hardly oriented thereon, so that the resulting film tends to have a poor appearance. On the other hand, the value of the water droplet contact angle on the surface of the film after subjected to the surface treatment which is lower by more than 30° than the value before subjected to the surface treatment tends to be unpractical owing to the presence of limitation to the corona treating effects, and therefore tends to result in poor productivity.

EXAMPLES

The present invention is described in more detail below by Examples. However, these Examples are only illustrative and not intended to limit the present invention thereto, and other changes or modifications may be possible and involved within the scope of the present invention unless departing from the subject matter of the present invention. In addition, the measuring and evaluating methods used in the present invention are as follows.

(1) Measurement of intrinsic viscosity of polyester:

One gram of a polyester from which the other polymer components incompatible with the polyester and pigments were previously removed was accurately weighed, and mixed with and dissolved in 100 mL of a mixed solvent comprising phenol and tetrachloroethane at a weight ratio of 50:50, and a viscosity of the resulting solution was measured at 30°C.

(2) Measurement of average particle diameter (d50: $\mu$m):

A cumulative 50% value (based on weight) of particle diameters in an equivalent sphere diameter distribution measured using a centrifugal precipitation type particle size distribution measuring apparatus "SA-CP3 Model" manufactured by Shimadzu Seisakusho Co., Ltd., was regarded as an average particle diameter.

(3) Measurement of light transmittance of polyester film:

A total light transmittance of the polyester film was measured using an integrating sphere turbidity meter "NDH-300A" manufactured by Nippon Denshoku Industries Co., Ltd., according to JIS K7105, and the transmittance of the polyester film was evaluated according to the following ratings.

A: Transmittance in the range of 88.7 to 88.8%.
B: Transmittance in the range of 88.0 to 88.6%.
C: Transmittance in the range of less than 88.0.

(4) Measurement of haze (turbidity) of polyester film:

A haze of the polyester film was measured using an integrating sphere turbidity meter "NDH-300A" manufactured by Nippon Denshoku Industries Co., Ltd., according to JIS K7105, and the haze of the polyester film was evaluated according to the following ratings.

A: The haze was lower than 1.8%.
B: The haze was in the range of 1.8 to 2.0%.
C: The haze was higher than 2.0%.

(5) Surface corona treatment intensity:

The surface of the film was subjected to corona treatment using an in-line corona treatment apparatus "Corona Surface Treatment Apparatus HFSS-1001 Model" manufactured by Kasuga Electric Works Ltd. The index of the corona treatment intensity was represented by a discharge amount (W/m$^2$/min) and a discharge degree (W/cm$^2$) which were respectively calculated from the following formulae.

$$\text{Discharge amount} = P/(L \times V)$$

$$\text{Discharge degree} = P/S$$

(6) Measurement of water droplet contact angle of surface of film after subjected to surface treatment:

The water droplet contact angle of the polyester film with distilled water was measured at a temperature of 23°C and a humidity of 50% RH before and after subjecting the polyester film to surface corona treatment using a contact angle meter "CA-DT-A Model" manufactured by Kyowa Interface Science Co., Ltd. The measurement of the contact angle was carried out at left and right two points of each of three polyester film specimens before and after subjected to the corona treatment, i.e., total 6 measured values were obtained, and an average of the 6 measured values was calculated and regarded as a water droplet contact angle of the polyester film. Meanwhile, the diameter of the water droplet was 1.5 mm, and after the elapse of 1 min from dropping the water droplet on the film, the contact angle was measured.

The water droplet contact angle of the surface of the film after subjected to the corona treatment was evaluated according to the following ratings.

A: The contact angle was 40 to 45°.
B: The contact angle was 30 to 39° or 46 to 55°.
C: The contact angle was more than 55° or was considerably decreased below 30°.

(7) Visual observation of surface-treated film after coated with liquid crystal:

The film obtained after subjected to the corona treatment was visually observed to examine whether or not the orientable liquid crystal could be oriented, by using a general liquid crystal as the orientable liquid crystal, and the orientation of the liquid crystal was evaluated according to the following ratings.

A: Neat surface shape was attained without occurrence of unevenness or streaks.

B: Unevenness or streaks were visually recognized.

C: The liquid crystal orientation film could not be oriented, or a surface shape thereof was very poor.

The polyesters used in the respective Examples and Comparative Examples were prepared by the following methods.

<u><Method for producing polyester (A)></u>

One hundred parts by weight of dimethyl terephthalate and 60 parts by weight of ethylene glycol as starting materials were charged together with 0.09 part by weight of magnesium acetate tetrahydrate as a catalyst into a reaction vessel, and the reaction therebetween was initiated at 150°C. The reaction temperature was gradually raised while distilling off methanol as produced, and allowed to reach 230°C after 3 hr. After 4 hr, the transesterification reaction was substantially terminated. Added to the resulting reaction mixture were added 0.04 part by weight of ethyl acid phosphate and then 0.04 part by weight of antimony trioxide, and the obtained mixture was subjected to polycondensation reaction for 4 hr. More specifically, the reaction temperature was gradually raised from 230°C until reaching 280°C. On the other hand, the reaction pressure was gradually reduced from normal pressures until finally reaching 0.3 mmHg. After initiation of the reaction, the change in agitation power in the reaction vessel was monitored, and the reaction was terminated at the time at which a viscosity of the reaction solution reached the value corresponding to an intrinsic viscosity of 0.63 on the basis of the change in agitation power in the reaction vessel. The resulting polymer was discharged under application of a nitrogen pressure from the reaction vessel, thereby obtaining a polyester (A) having an intrinsic viscosity of 0.63.

<u><Method for producing polyester (B)></u>

The same procedure as defined in the above method for producing the polyester (A) was conducted except that after adding 0.04 part by weight of ethyl acid phosphate to the reaction mixture, 0.2 part by weight of silica particles having a Mohs hardness of 5 and an average particle diameter of 2.0 $\mu$m in the form of a dispersion in ethylene glycol and 0.04 part by weight of antimony trioxide were added to the resulting mixture, and the polycondensation reaction was terminated at the time at which a viscosity of the reaction solution reached the value corresponding to an intrinsic viscosity of 0.65, thereby obtaining a polyester (B) having an intrinsic viscosity of 0.65.

<u>Example 1:</u>

A mixed raw material obtained by mixing the polyesters (A) and (B) in amounts of 92% and 8%, respectively, as a raw material for outermost layers (surface layers), and the polyester (A) as a raw material for an intermediate layer, were respectively charged into two separate extruders, melted therein at 290°C, and then co-extruded into a sheet-like shape having a two-kind/three-layer structure (surface layer A/intermediate layer B/surface layer C) from a die onto a cooling roll whose surface was controlled to a temperature of 40°C by an electrostatic adhesion method, followed by cooling and solidifying the thus extruded sheet on the cooling roll, thereby obtaining an unstretched sheet. Next, the thus obtained unstretched sheet was stretched utilizing a difference between peripheral speeds of rolls at 85°C and a stretch ratio of 3.7 times in a longitudinal direction thereof. Thereafter, the resulting stretched sheet was introduced into a tenter where the sheet was stretched at 120°C and a stretch ratio of 4.3 times in a lateral direction thereof and then heat-treated at a thermal fixing temperature of 235°C. The thus obtained biaxially stretched sheet was relaxed by 2% in the lateral direction, thereby obtaining a polyester film without a coating layer which had a thickness of 250 $\mu$m (surface layers A and C: 12.5 $\mu$m for each; intermediate layer B: 225 $\mu$m) and an intrinsic viscosity of 0.61. The thus produced polyester film was subjected to surface corona treatment using a surface corona treatment apparatus manufactured by Kasuga Electric Works Ltd., such that the discharge amount and the discharge degree were 16 W/m$^2$/min and 9 W/cm$^2$, respectively. The thus obtained polyester film had a surface water droplet contact angle of 44°, and the degrees of flaws and haze were not changed from those before the treatment as far as visually observed, so that the surface of the polyester film was kept neat. In addition, a coating solution prepared by dissolving an orientable liquid crystal (D) in chloroform was applied onto the surface layer A of the polyester film after subjected to the corona treatment, and then dried such that the coating amount of the resulting liquid crystal layer after dried was 0.03 g/m$^2$. As a result of visually observing and evaluating the resulting polyester film, it was confirmed that the film was free from occurrence of streaks and unevenness and therefore kept neat. Meanwhile, examples of compounds constituting the above liquid crystal layer are as follows.

(Examples of compounds)

- Nematic liquid crystal (ZLI-2293: Merk)
- Chiral dopant (MLC-6248: Merk)
- Photopolymerizable liquid crystal (RM257: Merk)
- QtT (Quarter Thiophene)

The above compounds are described in the following reference document.
Reference document: K. AMEMIYA, et al., "Applied Physics", Vol. 44, No. 6A, 2005, pp. 3748-3750

Examples 2 to 5:

The same procedure as defined in Example 1 was conducted except that the discharge amount and discharge degree of the corona treatment to which the surface of the polyester film was subjected were changed variously, thereby obtaining polyester films. Various properties of the thus obtained polyester films are as shown in Table 1.
Table 1

|  | Examples | | | | |
|---|---|---|---|---|---|
|  | 1 | 2 | 3 | 4 | 5 |
| Discharge amount (W/m$^2$/min) | 16 | 26 | 33 | 6 | 55 |
| Discharge degree (W/cm$^2$) | 9 | 16 | 20 | 4 | 33 |
| Total light transmittance (%) | A 88.7 | A 88.7 | A 88.7 | A 88.8 | B 88.6 |
| Haze (%) | A 1.7 | A 1.7 | A 1.7 | A 1.7 | A 1.7 |
| Surface water droplet contact angle (°) | A 44 | A 40 | B 35 | A 43 | B 31 |
| Appearance after coated with liquid crystal | A | A | A | B | B |

Comparative Examples 1 to 5:

The same procedure as defined in Example 1 was conducted except that the discharge amount and discharge degree of the corona treatment to which the surface of the polyester film was subjected were changed variously, thereby obtaining polyester films. Various properties of the thus obtained polyester films are as shown in Table 2. As a result of visually observing and evaluating the polyester films obtained after being subjected to the corona treatment and being coated to form a liquid crystal layer thereon, it was confirmed that the films suffered from defects such as occurrence of streaks and unevenness on the surface thereof. In Comparative Example 5, holes were formed on the surface of the obtained film owing to an excessively strong voltage applied thereto.
**Table 2**

|  | Comparative Examples | | | | |
|---|---|---|---|---|---|
|  | 1 | 2 | 3 | 4 | 5 |
| Discharge amount (W/m$^2$/min) | 0 | 4 | 62 | 100 | 200 |
| Discharge degree (W/cm$^2$) | 0 | 2 | 37 | 60 | 4 |
| Total light transmittance (%) | A 88.7 | A 88.7 | B 88.6 | B 88.5 | - |

(continued)

|  | Comparative Examples | | | | |
|---|---|---|---|---|---|
|  | 1 | 2 | 3 | 4 | 5 |
| Haze (%) | A 1.7 | A 1.7 | B 1.8 | B 1.8 | - |
| Surface water droplet contact angle after subjected to corona treatment (°) | - | C 58 | C 29 | C 29 | - |
| Appearance after coated with liquid crystal | C | C | C | C | - |

INDUSTRIAL APPLICABILITY

The polyester film according to the present invention can be suitably used for brightness enhancement members.

**Claims**

1.    A polyester film for brightness enhancement members which has a laminated structure having a total thickness of 125 to 300 $\mu$m and comprising no coating layer, at least one of outermost surfaces of the polyester film having a water droplet contact angle of 30 to 55°C.

2.    A polyester film for brightness enhancement members according to claim 1, wherein the polyester film comprises an orientable liquid crystal coating layer subjected to no orientation treatment, the coating layer being formed on the at least one outermost surface of the polyester film which has a water droplet contact angle of 30 to 55°C.

<div align="center">

**INTERNATIONAL SEARCH REPORT**

</div>

| | International application No. |
|---|---|
| | PCT/JP2011/050082 |

| A. CLASSIFICATION OF SUBJECT MATTER |
|---|
| *B32B27/36*(2006.01)i, *G02B5/30*(2006.01)i |
| According to International Patent Classification (IPC) or to both national classification and IPC |

| B. FIELDS SEARCHED |
|---|
| Minimum documentation searched (classification system followed by classification symbols) |
| B32B27/36, G02B5/30 |
| Documentation searched other than minimum documentation to the extent that such documents are included in the fields searched |
| Jitsuyo Shinan Koho          1922–1996   Jitsuyo Shinan Toroku Koho   1996–2011 <br> Kokai Jitsuyo Shinan Koho    1971–2011   Toroku Jitsuyo Shinan Koho   1994–2011 |
| Electronic data base consulted during the international search (name of data base and, where practicable, search terms used) |

| C. DOCUMENTS CONSIDERED TO BE RELEVANT |
|---|

| Category* | Citation of document, with indication, where appropriate, of the relevant passages | Relevant to claim No. |
|---|---|---|
| X <br> Y | WO 2007/032295 A1  (Toray Industries, Inc.), <br> 22 March 2007 (22.03.2007), <br> paragraphs [0002], [0018], [0084] <br> & EP 1942132 A1 | 1 <br> 1 |
| Y | JP 2000-108286 A  (Teijin Ltd.), <br> 18 April 2000 (18.04.2000), <br> paragraphs [0040] to [0042] <br> (Family: none) | 1 |
| A | JP 2008-203752 A  (Hitachi Maxell, Ltd.), <br> 04 September 2008 (04.09.2008), <br> entire text <br> (Family: none) | 1-2 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 16 March, 2011 (16.03.11) | 29 March, 2011 (29.03.11) |

| Name and mailing address of the ISA/ <br> Japanese Patent Office | Authorized officer |
|---|---|
| Facsimile No. | Telephone No. |

Form PCT/ISA/210 (second sheet) (July 2009)

**INTERNATIONAL SEARCH REPORT**

International application No.

PCT/JP2011/050082

| C (Continuation). DOCUMENTS CONSIDERED TO BE RELEVANT | | |
|---|---|---|
| Category* | Citation of document, with indication, where appropriate, of the relevant passages | Relevant to claim No. |
| A | WO 2009/020194 A1  (Teijin DuPont Films Japan Ltd.),<br>12 February 2009 (12.02.2009),<br>entire text<br>& TW 2009-023434 A | 1-2 |
| P,A | JP 2010-176022 A  (Nippon Zeon Co., Ltd.),<br>12 August 2010 (12.08.2010),<br>entire text<br>(Family: none) | 1-2 |

Form PCT/ISA/210 (continuation of second sheet) (July 2009)

**EP 2 522 507 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2767382 B
- JP 59005216 A

- JP 59217755 A

**Non-patent literature cited in the description**

- **K. AMEMIYA et al.** *Applied Physics,* 2005, vol. 44 (6A), 3748-3750